(19) Europäisches Patentamt
European Patent Office
Office européen des brevets

(11) **EP 2 507 326 B1**

(12) **EUROPEAN PATENT SPECIFICATION**

(45) Date of publication and mention of the grant of the patent:
**29.07.2020 Bulletin 2020/31**

(21) Application number: **10788199.7**

(22) Date of filing: **02.12.2010**

(51) Int Cl.:
*C09D 5/29* (2006.01)      *C09D 7/65* (2018.01)
*C08F 257/02* (2006.01)    *G01N 21/47* (2006.01)
*C08F 285/00* (2006.01)    *C09D 151/00* (2006.01)
*C09D 7/40* (2018.01)

(86) International application number:
**PCT/US2010/058677**

(87) International publication number:
**WO 2011/068942 (09.06.2011 Gazette 2011/23)**

(54) **CRYSTALLINE COLLOIDAL ARRAY OF PARTICLES BEARING REACTIVE SURFACTANT**

KRISTALLINE KOLLOIDALE ANORDNUNG AUS PARTIKELN MIT EINEM REAKTIVEN TENSID

ENSEMBLE COLLOÏDAL CRISTALLIN DE PARTICULES PORTANT UN TENSIOACTIF RÉACTIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2009 US 631085**

(43) Date of publication of application:
**10.10.2012 Bulletin 2012/41**

(73) Proprietor: **PPG Industries Ohio, Inc.
Cleveland, OH 44111 (US)**

(72) Inventors:
• **XU, Xiangling
Pittsburgh
Pennsylvania 15101 (US)**
• **VANIER, Noel, R.
Wexford
Pennsylvania 15090 (US)**

(74) Representative: **f & e patent
Fleischer, Engels & Partner mbB, Patentanwälte
Braunsberger Feld 29
51429 Bergisch Gladbach (DE)**

(56) References cited:
EP-A1- 2 135 684        WO-A1-01/40872
WO-A1-2009/154857       US-A1- 2007 100 026
US-A1- 2008 188 381     US-B1- 6 525 136

• ZHIYU WANG ET AL: "Control of Surfadant level in Starve-Fed Emulsion Polymerization. 1. Sulfate-Containing Oligomers: Preparation and Application as Surfactant in Emulsion Polymerization", JOURNAL OF POLYMER SCIENCE. PART A, POLYMER CHEMISTRY, JOHN WILEY & SONS, INC, US, vol. 33, 1 January 1995 (1995-01-01), pages 1597-1606, XP007917276, ISSN: 0887-624X

## Description

## FIELD OF THE INVENTION

This invention relates to crystalline colloidal arrays, more particularly, to periodic arrays of particles wherein the particles have reactive surfactant covalently bound thereto.

## BACKGROUND OF THE INVENTION

Radiation diffractive materials based on crystalline colloidal arrays have been used for a variety of purposes. A crystalline colloidal array (CCA) is a three-dimensional ordered array of mono-dispersed colloidal particles. The particles are typically composed of a polymer, such as polystyrene. These colloidal dispersions of particles can self-assemble into ordered arrays (crystalline structures) having lattice spacings that are comparable to the wavelength of ultraviolet, visible, or infrared radiation. The crystalline structures have been used for filtering narrow bands of selective wavelengths from a broad spectrum of incident radiation, while permitting the transmission of adjacent wavelengths of radiation. Alternatively, CCAs are fabricated to diffract radiation for use as colorants, markers, optical switches, optical limiters, and sensors.

Many of these devices have been created by dispersing particles in a liquid medium, whereby the particles self-assemble into an ordered array. The positions of the particles in the array may be fixed by mutual polymerization of the particles or by introducing a solvent that swells and locks the particles together.

Other CCAs are produced from a dispersion of similarly charged mono-dispersed particles in a carrier containing a non-reactive surfactant. The dispersion is applied to a substrate, and the carrier is evaporated to yield an ordered periodic array of particles. The array is fixed in place by coating the array with a curable polymer, such as an acrylic polymer, polyurethane, alkyd polymer, polyester, siloxane-contained polymer, polysulfide, or epoxy-containing polymer. Methods for producing such CCAs are disclosed in U.S. Patent No. 6,894,086, i US 2008/188381 and WO 01/40872 A1. Alternatively, the particles may have a core-shell structure where the core is produced from materials such as those described above for unitary particles and the shell is produced from the same polymers as the core material with the polymer of the particle shell different from the core material for a particular array of the core-shell particles. Such core-shell particles and methods of their production are disclosed, for example, in U.S. Patent Application Publication No. 2007/0100026.

In these arrays of unitary particles or core-shell particles, the structures diffract radiation according to Bragg's law, wherein the radiation meeting the Bragg conditions is reflected while adjacent spectral regions that do not meet the Bragg conditions are transmitted through the device. The wavelength of reflected radiation is in part determined by the effective refractive index of the array and the interparticle spacing within the array.

## SUMMARY OF THE INVENTION

The present invention includes a method of preparing a crystalline colloidal array comprising dispersing a monomer in an emulsion comprising a reactive surfactant; polymerizing the monomer to produce monodispersed polymeric particles, wherein the reactive surfactant is covalently bound to the polymeric particles; and applying the dispersion to a substrate, whereby the particles self-align into an ordered periodic array, wherein the reactive surfactant is selected from

(a) a reactive surfactant having a reactive group on the hydrophobic segment selected from $C_{10-20}$ alkyl chains, alkyl aryl segments, and polypropyloxy units;

(b) polymerizable surfactants having a hydrophilic portion selected from a sulfonate allyl amine moiety, a sulfate allyl amine moiety, and a phosphate allyl amine moiety, and a hydrophobic portion selected from -R and a group having the formula $R0-(CH_2 CH_2 0)n$ -; wherein R is an alkyl group or an alkyl-substituted phenyl group wherein the alkyl group has 1 to 20 carbon atoms, such as 10 to 18 carbon atoms, and n is an integer from 2 to 100; and

(c) polyethylene glycol monomethacrylate, polyethylene glycol acrylate, phosphate esters of poly(ethylene glycol) monomethacrylate, phosphate esters of poly(ethylene glycol) monoacrylate, poly(ethylene glycol) monomethacrylate sulfate, poly(ethylene glycol) monoacrylate sulfate, allyloxypolyethoxy sulfate, and allyloxypolyethoxy phosphate.

Also included in the present invention is a crystalline colloidal array comprising an ordered periodic array of polymeric particles, said particles each having a surface comprising a polymeric material and a reactive surfactant covalently bound to the surfaces of the particles and a matrix surrounding the array of polymeric particles, wherein the reactive surfactant is selected from

(a) a reactive surfactant having a reactive group on the hydrophobic segment selected from $C_{10-20}$ alkyl chains, alkyl aryl segments, and polypropyloxy units;

(b) polymerizable surfactants having a hydrophilic portion selected from a sulfonate allyl amine moiety, a sulfate allyl amine moiety, and a phosphate allyl amine moiety, and a hydrophobic portion selected from -R and a group having the formula $R0-(CH_2 CH_2 0)n$ -; wherein R is an alkyl group or an alkyl-substituted phenyl group wherein the alkyl group has 1 to 20 carbon atoms, such as 10 to 18 carbon atoms, and n is an integer from 2 to 100; and

(c) polyethylene glycol monomethacrylate, polyethylene glycol acrylate, phosphate esters of poly(ethylene glycol) monomethacrylate, phosphate esters of poly(ethylene glycol) monoacrylate, poly(ethylene glycol) monomethacrylate sulfate, poly(ethylene glycol) monoacrylate sulfate, allyloxypolyethoxy sulfate, and allyloxypolyethoxy phosphate.

## DETAILED DESCRIPTION OF THE INVENTION

For purposes of the following detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques. Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

The term "polymer" is meant to include homopolymer, copolymer, and oligomer. The term "metal" includes metals, metal oxides, and metalloids. The term "infuse" and related terms (such as infusion) refer to penetration from a liquid phase.

The present invention includes crystalline colloidal arrays (CCAs), where the CCAs diffract radiation in the visible and/or non-visible electromagnetic spectrum and methods for making the same. The CCA includes an ordered periodic array of particles received in a polymeric matrix. The array includes a plurality of layers of the particles and satisfies Bragg's law of:

$$m\lambda = 2nd\sin\theta$$

where m is an integer, n is the effective refractive index of the array, d is the distance between the layers of particles, and $\lambda$ is the wavelength of radiation reflected from a plane of a layer of the particles at angle $\theta$. The CCA is produced on a substrate as described below. As used herein, "a" wavelength of diffracted radiation includes a band of the electromagnetic spectrum around that wavelength. For example, reference to a wavelength of 600 nanometers (nm) may include 595 to 605 nm. The reflected radiation may be in the visible spectrum or invisible spectrum (infrared or ultraviolet radiation). As used herein, when a periodic array of particles is said to Bragg diffract radiation or reflect radiation according to Bragg's law, it is meant that at least some incident radiation is diffracted by the crystalline structure of the array, thereby producing some reflected radiation according to Bragg's law.

In the present invention, at least some of the particles have an effective amount of a reactive surfactant covalently bonded thereon. By "effective amount", it is meant that there is at least the minimal amount of material that is sufficient to achieve a desired effect, at least including the presence of minimal defects in the CCA due to non-uniformity in the location of surfactant as detailed below. The phrase "reactive surfactant" generally means any surfactant (e.g., surfmer (non-reactive surfactant), non-migratory surfactant, etc.) that has the ability to fix itself onto the surface of a particle, for example, by formation of a covalent bond. Typically, the bonds between reactive surfactant(s) and the particle surface(s) are sufficiently strong to prevent separation and migration therebetween. In contrast, a "non-reactive surfactant" means a surfactant that is adsorbed (as opposed to fixed, reacted, or bonded) onto the surface of the particle. By "particle surface" is meant the outermost surface, including an outer surface of a particle having a unitary structure or an outermost surface of a particle having a core-shell structure, both described below.

As used herein, a particle having a "unitary structure" refers to the particle having a generally uniform structure without component structure (e.g., not a core-shell structure), although the composition thereof may vary through the unitary particle, such as may occur upon diffusion of solvent or matrix therein. Suitable materials for unitary particles include polymers such as polystyrene, polyurethane, acrylic polymers, alkyd polymers, polyester, siloxane-containing polymers, polysulfides, epoxy-containing polymers, and polymers derived from epoxy-containing polymers, as well as inorganic materials, such as metal oxides (e.g., alumina, silica, or titanium dioxide) or semiconductors (e.g., cadmium selenide) or composites of these materials. By "core-shell structure" it is meant that the core is produced from a different composition from the shell composition. Suitable compositions for the particle core include the above-listed materials for unitary particles. Suitable compositions for the shell include organic polymers that may be cross-linked (e.g., polystyrene, polyurethane, acrylic polymers, alkyd polymers, polyester, siloxane-containing polymers, polysulfides, epoxy-containing polymers, or polymers derived from epoxy-containing polymers), with the composition of the particle shell differing from the core material. The shell material may be non-film-forming (e.g. cross-linked), meaning that the shell material remains in position surrounding each particle core without forming a film of the shell material, so that the core-shell particles remain as discrete particles within the polymeric matrix. As such, a CCA of core-shell particles may include at least three general regions, including the matrix, the particle shell, and the particle core. Alternatively, the shell material may be film-forming, such that the shell material forms a film around the cores. The core material and the shell material may have different indices of refraction. In addition, the refractive index of the shell may vary as a function of the shell thickness in the form of a gradient of refractive index through the shell thickness. The refractive index gradient may be a result of a gradient in the composition of the shell material through the shell thickness. For particles that are generally spherical, the diameter of the core may constitute 85 to 95% of the total particle diameter or 90% of the total particle diameter with the shell constituting the balance of the particle diameter and having a radial thickness dimension.

In one embodiment of the present invention, unitary particles are produced by emulsion polymerization. Monomers (e.g. styrene, acrylate) and optional initiators (e.g., sodium persulfate) are dispersed in an emulsion containing a reactive surfactant to produce unitary particles. The monomers dispersed in the emulsion may include a single compound or a plurality of compounds, and may include crosslinking monomers such as divinyl benzene. The unitary particles are purified from the dispersion by techniques such as ultra-filtration, dialysis, or ion exchange to remove undesired materials, such as unreacted monomer, small polymers, water, initiator, unbound surfactant, unbound salt, and grit (agglomerated particles) to produce a monodispersion of charged particles. Ultra-filtration is particularly suitable for purifying charged particles. When the particles are in dispersion with other materials, such as salts or by-products, the repelling forces of the charged particles can be mitigated; therefore, the particle dispersion is purified to essentially contain only the charged particles, which then readily repel each other and form an ordered array on a substrate as described below.

In another embodiment, core-shell particles are produced via emulsion polymerization in two stages. In a first stage, core precursor monomers (with optional initiators) and surfactant are dispersed in an emulsion containing surfactant. The core precursor monomers polymerize yielding a dispersion of particle cores. Shell monomers are added to the core particle dispersion containing the reactive surfactant, whereby the shell monomers polymerize onto the core particles with the reactive surfactant bound to the shell. The particle cores may be produced in an emulsion containing the non-reactive surfactant or both reactive and non-reactive surfactant. However, polymerization of the shell monomers onto the core particles is performed in an emulsion containing reactive surfactant. The core-shell particles are purified as described above with regard to purification of unitary particles to produce a dispersion of charged core-shell particles, which then form an ordered array on a substrate as described below.

Upon producing either unitary or core-shell particles, at least a portion of the outer (exterior) surface of either type of particle has reactive surfactant bound thereto. Unlike traditional particles having non-reactive surfactants adsorbed to the surface, the particles of the present invention include reactive surfactants that are covalently bound to at least a portion of the particle surfaces and which remain on the particle surfaces during and following the formation of the array. An array produced from the particles synthesized with the reactive surfactant as described above shows dramatic reduction in defects when compared to arrays produced from particles that are stabilized with absorptive (non-reactive) surfactants. The benefits of using reactive surfactants in emulsion polymerization of monomers to produce particles are born out as detailed below when the particles are further processed into CCAs.

Certain reactive surfactants are molecules that have a long hydrophobic segment and a short ionizable and/or polar group. The hydrophobic segment preferentially absorbs onto the surface of the particle during and following particle polymerization. A hydrophilic portion extends into the aqueous solution phase of the dispersion. Reactive surfactants additionally contain a reactive group on the hydrophobic segment that is capable of covalently bonding to the particle surface. For example, the reactive group on the hydrophobic segment may include a carbon double bond. Alternatively, the reactive group may be present on the hydrophilic portion. One example of a reactive group on the hydrophilic portion is an amine. In certain embodiments of the present invention, the reactive group on the reactive surfactant is also present in the monomer(s) so that the reactive surfactant binds more readily to the particle surface during the polymerization reaction.

Suitable reactive surfactants for use with the present invention include any surfactants having a reactive group on the hydrophobic segment that are capable of covalently bonding to the surface of the particle. The length and composition of the hydrophobic segment of the reactive surfactant may be selected to substantially correspond to the surface chemistry of the particle. Non-limiting examples of hydrophobic segments include $C_{10-20}$ alkyl chains, alkyl aryl segments, and polypropyloxy units. The hydrophilic group may be anionic, cationic, or non-ionic. Suitable anionic functional groups include, for example, sulfonate, phosphonate, and carboxylate ions. Suitable cationic functional groups include, for example, ammonium ions. Suitable non-ionic surfactants typically include surfactants exhibiting ethoxy group hydrophilicity.

The reactive group can be selected based on the reactive species of the particle monomer. For example, acrylate reactive groups could be selected for use with particles composed of polymerized vinyl, acrylic, and/or styrenic monomers. Representative reactive surfactants include polyethylene glycol monomethacrylate, polyethylene glycol acrylate, phosphate esters of poly(propylene glycol) monomethacrylate, phosphate esters of poly(propylene glycol) monoacrylate, phosphate esters of poly(ethylene glycol) monomethacrylate, phosphate esters of poly(ethylene glycol) monoacrylate, poly(propylene glycol) monomethacrylate sulfate, poly(propylene glycol) monoacrylate sulfate, poly(ethylene glycol) monomethacrylate sulfate, poly(ethylene glycol) monoacrylate sulfate, allyloxypolyethoxy sulfate, allyloxypolyethoxy phosphate, allyloxypolypropyloxy sulfate, and allyloxypolypropyloxy phosphate. In particular embodiments of the invention, the reactive surfactant may include 1 to 40 ethyleneoxy or propyloxy units. Other suitable reactive surfactants include polymerizable surfactants having a hydrophilic portion including a sulfonate allyl amine moiety, a sulfate allyl amine moiety, or a phosphate allyl amine moiety, and a hydrophobic portion selected from - R, or a group having the formula $RO-(CH_2CH_2O)_n-$; wherein R is an alkyl group or an alkyl-substituted phenyl group wherein the alkyl group has 1 to 20 carbon atoms, such as 10 to 18 carbon atoms, and n is an integer from 2 to 100, such as 2 to 15, as disclosed in U.S. Patent Application Publication No. 2009/0163619.

The hydrophilic portion and the hydrophobic portion may be connected by means of a covalent bond. Combinations of such reactive surfactants can be used in preparing the particles.

Array of particles

In one embodiment of the present invention, excess raw material, by-products, solvent, and the like are removed from the dispersion, such as described above. The dispersion of particles is applied to a substrate and electrostatic repulsion of the charged particles causes the particles to self-assemble into an ordered array. The dispersion of the particles applied to the substrate may contain 10-70 vol. % of charged particles, such as 30-65 vol. % of charged particles. The dispersion can be applied to the substrate by dipping, spraying, brushing, roll-coating, curtain coating, flow-coating, or die-coating to a desired thickness. The wet coating may have a thickness of 4-50 microns, such as 20 microns. The dispersion applied on the substrate is dried, whereafter the material may contain essentially only the particles that have self-assembled in a Bragg array and diffract radiation accordingly.

It has been found that non-reactive surfactants tend to remain adsorbed on the particle surfaces, even after ultrafiltration or dialysis of the particle dispersion. Upon drying to produce the array, non-reactive surfactant can accumulate in discreet locations of the array, and, as described below, which can result in defects in the final product. In contrast, the reactive surfactant used in the present invention remains bound to the particle surfaces and is not able to migrate or accumulate at a degree to which will cause non-uniformity in the resulting array of particles. In one embodiment, at least 30% of the reactive surfactant that is present in the dispersion when the dispersion is applied to the substrate becomes bound to the particles and remains bound to the particles in the CCA.

Matrix

The dried array of particles (unitary or core-shell) on a substrate may be fixed in a matrix by coating the array of particles with a fluid curable matrix composition that includes monomers and/or other polymer precursor materials, such as disclosed in U.S. Patent No. 6,894,086 to interpenetrate the array of particles with the curable matrix composition. The curable matrix composition may be coated onto the dried array of particles via dipping, spraying, brushing, roll-coating, gravure coating, curtain coating, flow coating, slot-die coating, or ink-jet coating. By coating, it is meant that the curable matrix composition covers at least substantially the entirety of the array and at least in part fills the interstitial spaces between the particles.

The matrix material may be different from the material of the particles and may be an organic polymer such as polystyrene, polyurethane, acrylic polymers, alkyd polymers, polyester, siloxane-containing polymers, epoxy-containing polymers, and/or polymers derived from an epoxy-containing polymer. In one embodiment, the matrix material is a water-soluble or hydrophilic acrylic polymer. Suitable monomers for producing a water soluble or hydrophilic matrix include, but are not limited to, ethoxylated trimethylolpropane triacrylate, polyethylene glycol (600) diacrylate, polyethylene glycol (400) diacrylate, polyethylene glycol (200) diacrylate, and acrylic acid, followed by curing of the matrix composition to yield an organic matrix. Other suitable monomers for producing a water soluble or hydrophilic polymer matrix may include polyethylene glycol (1000) diacrylate, methoxy polyethylene glycol (350) monoacrylate, methoxy polyethylene glycol (350) monomethacrylate, methoxy polyethylene glycol (550) monomethacrylate, methoxy polyethylene glycol (550) monoacrylate, ethoxylated$_{30}$ bisphenol A diacrylate, 2-(2-ethoxyethoxy) ethyl acrylate, acrylamide, hydroxyethyl acrylate, hydroxypropyl acrylate, polyethylene glycol (600) dimethacrylate, polyethylene glycol (400) dimethacrylate, ethoxylated$_{30}$ bisphenol A dimethacrylate, hydroxyethyl methacrylate, and hydroxypropyl methacrylate.

As detailed below, the array of particles received in a matrix may be produced on a substrate that functions as a temporary support or on a substrate that is a desired end-use for the CCA. By temporary support, it is meant that the substrate is used to support production of the CCA of the present invention, which is subsequently removed therefrom in self-supporting form such as, for example, a self-supporting film or comminuted particulate matter. The end-use and final form of the CCA is not limited to those described herein.

In one embodiment, the CCA of the present invention is non-gelatinous and substantially solid. By non-gelatinous, it is meant that the CCA does not contain a fluidizing material, such as water, and is not a hydrogel, nor produced from a hydrogel. In certain embodiments, the CCA of the present invention substantially only includes the particles and the matrix with some possible residual solvent and, thus, is substantially solid. The volumetric ratio of the particles to the matrix in the CCA is typically about 25:75 to about 80:20.

Imaging

An image may be produced in the CCA using actinic radiation as described below. In one embodiment, an array of particles is received within a curable matrix, such as by pre-arranging similarly charged particles in a periodic array on a substrate and coating the array of particles with a curable matrix composition. The periodic array of particles may be coated by applying a curable matrix composition onto the array by spraying, brushing, roll coating, gravure coating, curtain coating, flow coating, slot-die coating, or ink-jet coating (as described in U.S. Patent No. 6,894,086) or by embedding the array of particles into a coating composition on a substrate.

A first portion of the matrix coated array is exposed to actinic radiation to cure the matrix composition in the exposed portion. The remaining portion of the array that was not exposed to actinic radiation is treated to alter the inter-particle spacing of the particles in the remaining portion of the array. After alteration of the inter-particle spacing of the particles, the array is exposed to actinic radiation to cure the remaining portion of the matrix. The portion of the CCA that was first exposed diffracts radiation at a different wavelength band than the remaining portion. For example, the first portion may be exposed to actinic radiation by use of a mask or by focused laser radiation. In one embodiment, when the matrix composition is curable with ultraviolet (UV) radiation, such as an acrylate-based composition, the actinic radiation used to cure the matrix composition includes UV radiation.

In another embodiment, a first portion of the matrix coated array is exposed to actinic radiation to cure the curable matrix in the exposed portion. The remaining unexposed portion is altered in a manner that disturbs the array and prevents the remaining portion from diffracting radiation. An ordered periodic array of particles may be disturbed by various techniques including, for example, by applying a solvent to the array that at least partially dissolves the particles, overheating the unexposed portion to destroy the particles, or by mechanically disrupting the particles.

Substrate

The substrate may be a flexible material, such as metal sheet or foil (e.g., aluminum foil), paper or a film (or sheet) of polyester or polyethylene terephthalate (PET), or an inflexible material, such as glass or plastic. By "flexible" it is meant that the substrate can undergo mechanical stresses, such as bending, stretching, compression, and the like, without significant irreversible change. One suitable substrate is a microporous sheet. Some examples of microporous sheets are disclosed in U.S. Patent Nos. 4,833,172; 4,861,644; and 6,114,023. Commercially available microporous sheets are sold under the designation Teslin® by PPG Industries, Inc. Other suitable flexible substrates include natural leather, synthetic leather, finished natural leather, finished synthetic leather, suede, vinyl nylon, ethylene vinyl acetate foam (EVA foam), thermoplastic urethane (TPU), fluid-filled bladders, polyolefins and polyolefin blends, polyvinyl acetate and copolymers, polyvinyl chloride and copolymers, urethane elastomers, synthetic textiles, and natural textiles.

In certain embodiments, the flexible substrates are compressible substrates. "Compressible substrate" and like terms refer to substrates capable of undergoing a compressive deformation and returning to substantially the same shape once the compressive deformation has ceased. The term "compressive deformation" means a mechanical stress that reduces the volume at least temporarily of a substrate in at least one direction. As noted above, the CCA of the present invention may be applied to a compressible substrate. A compressible substrate is one, for example, that has a compressive strain of 50% or greater, such as 70%, 75%, or 80% or greater. Particular examples of compressible substrates include those comprising foam and polymeric bladders filled with air, liquid, and/or plasma. "Foam" can be a polymeric or natural material comprising open cell foam and/or closed cell foam. "Open cell foam" means that the foam comprises a plurality of interconnected air chambers; "closed cell foam" means that the foam comprises discrete closed pores. Example foams include, but are not limited to, polystyrene foams, polyvinyl acetate and/or copolymers, polyvinyl chloride and/or copolymers, poly(meth)acrylimide foams, polyvinylchloride foams, polyurethane foams, thermoplastic urethane foams, and polyolefinic foams and polyolefin blends. Polyolefinic foams include, but are not limited to, polypropylene foams, polyethylene foams, and ethylene vinyl acetate ("EVA") foams. "EVA foam" can comprise open cell foam, and/or closed cell foam.

EVA foam can include flat sheets or slabs or molded EVA foams, such as shoe midsoles. Different types of EVA foam can have different types of surface porosity. Molded EVA foam can comprise a dense surface or "skin", whereas flat sheets or slabs can exhibit a porous surface.

Polyurethane substrates according to the present invention include aromatic, aliphatic, and hybrid (hybrid examples are silicone polyether or polyester urethane and silicone carbonate urethane) polyester or polyether based thermoplastic urethane. By "plastic" is meant any of the common thermoplastic or thermosetting synthetic materials, including thermoplastic olefins ("TPO") such as polyethylene and polypropylene and blends thereof, thermoplastic urethane, polycarbonate, sheet molding compound, reaction-injection molding compound, acrylonitrile-based materials, nylon, and the like. A particular plastic is TPO that comprises polypropylene and EPDM (ethylene propylene diene monomer).

The CCA may be applied to an article in various ways. In one embodiment, the CCA is produced on a substrate and is then removed from the substrate and comminuted into particulate form, such as in the form of flakes. The comminuted material may be incorporated as an additive in a coating composition for applying to an article. It may be beneficial to minimize the haze in a coating composition containing the comminuted material. Reduced haze may be achieved by reducing the difference in refractive index between the matrix and particles of the CCA. However, a reduction in the refractive index difference generally reduces the intensity of refracted radiation. Therefore, when minimal haze is desired and the refractive index difference is reduced, intensity may be maintained by increasing the thickness of the material, i.e., by increasing the quantity of layers of particles in the array, as compared to material in which the refractive indices of the matrix and particles are more distinct from each other.

Coating Composition

In one embodiment, the coating composition comprises a "hard coat", such as an alkoxide. The alkoxide can be further mixed and/or reacted with other compounds and/or polymers known in the art. Particularly suitable are compositions comprising siloxanes formed from at least partially hydrolyzing an organoalkoxysilane, such as one within the formula above. Examples of suitable alkoxide-containing compounds and methods for making them are described in U.S. Patent Nos. 6,355,189; 6,264,859; 6,469,119; 6,180,248; 5,916,686; 5,401,579; 4,799,963; 5,344,712; 4,731,264; 4,753,827; 4,754,012; 4,814,017; 5,115,023; 5,035,745; 5,231,156; 5,199,979; and 6,106,605

In certain embodiments, the alkoxide comprises a combination of a glycidoxy[($C_1$-$C_3$)alkyl]tri($C_1$-$C_4$)alkoxysilane monomer and a tetra($C_1$-$C_6$)alkoxysilane monomer. Glycidoxy[($C_1$-$C_3$)alkyl]tri($C_1$-$C_4$)alkoxysilane monomers

suitable for use in the coating compositions of the present invention include glycidoxymethyltriethoxysilane, $\alpha$-glycidoxyethyltrimethoxysilane, $\alpha$-glycidoxyethyltriethoxysilane, $\beta$-giycidoxyethyltrimethoxysilane, $\beta$-glycidoxyethyltriethoxysilane, $\alpha$-glycidoxy-propyltrimethoxysilane, $\alpha$-glycidoxypropyltriethoxysilane, $\beta$-glycidoxypropyltrimethoxysilane, $\beta$-glycidoxypropyl-triethoxysilane, $\gamma$-glycidoxypropyltrimethoxysilane, hydrolysates thereof, and/or mixtures of such silane monomers. Suitable tetra($C_1$-$C_6$)alkoxysilanes that may be used in combination with the glycidoxy[($C_1$-$C_3$)alkyl]tri($C_1$-$C_4$)alkoxysilane in the coating compositions of the present invention include, for example, materials such as tetramethoxysilane, tetraethoxysilane, tetrapropoxysilane, tetrabutoxysilane, tetrapentyloxysilane, tetrahexyloxysilane, and mixtures thereof.

In certain embodiments, the glycidoxy[($C_1$-$C_3$)alkyl]tri($C_1$-$C_4$)alkoxysilane and tetra($C_1$-$C_6$)alkoxysilane monomers used in the coating compositions of the present invention are present in a weight ratio of glycidoxy [($C_1$-$C_3$)alkyl]tri($C_1$-$C_4$)alkoxysilane to tetra($C_1$-$C_6$)alkoxysilane of from 0.5:1 to 100:1, such as 0.75:1 to 50:1 and, in some cases, from 1:1 to 5:1. In certain embodiments, the alkoxide is at least partially hydrolyzed before it is combined with other components of the coating composition, such as polymer-enclosed color-imparting particles. Such a hydrolysis reaction is described in U.S. Patent No. 6,355,189 at column 3, lines 7 to 28, the cited portion of which is incorporated by reference herein. In certain embodiments, water is provided in an amount necessary for the hydrolysis of the hydrolyzable alkoxide(s). For example, in certain embodiments, water is present in an amount of at least 1.5 moles of water per mole of hydrolyzable alkoxide. In certain embodiments, atmospheric moisture, if sufficient, can be adequate.

In certain embodiments, a catalyst is provided to catalyze the hydrolysis and condensation reaction. In certain embodiments, the catalyst is an acidic material and/or a material, different from the acidic material, which generates an acid upon exposure to actinic radiation. In certain embodiments, the acidic material is chosen from an organic acid, inorganic acid, or mixture thereof. Nonlimiting examples of such materials include acetic, formic, glutaric, maleic, nitric, hydrochloric, phosphoric, hydrofluoric, sulfuric acid, or mixtures thereof.

Any material that generates an acid on exposure to actinic radiation can be used as a hydrolysis and condensation catalyst in the coating compositions of the present invention, such as a Lewis acid and/or a Bronsted acid. Non-limiting examples of acid generating compounds include onium salts and iodosyl salts, aromatic diazonium salts, metallocenium salts, o-nitrobenzaldehyde, the polyoxymethylene polymers described in U.S. Patent No. 3,991,033, the o-nitrocarbinol esters described in U.S. Patent No. 3,849,137, the o-nitrophenyl acetals, their polyesters, and end-capped derivatives described in U.S. Patent No. 4,086,210, sulphonate esters, or aromatic alcohols containing a carbonyl group in a position alpha or beta to the sulphonate ester group, N-sulphonyloxy derivatives of an aromatic amide or imide, aromatic oxime sulphonates, quinone diazides, and resins containing benzoin groups in the chain, such as those described in U.S. Patent No. 4,368,253. Examples of these radiation activated acid catalysts are also disclosed in U.S. Patent No. 5,451,345.

In certain embodiments, the acid generating compound is a cationic photoinitiator, such as an onium salt. Non-limiting examples of such materials include diaryliodonium salts and triarylsulfonium salts, which are commercially available as SarCat® CD-1012 and CD-1011 from Sartomer Company. Other suitable onium salts are described in U.S. Patent No. 5,639,802, column 8, line 59 to column 10, line 46. Examples of such onium salts include 4,4'-dimethyldiphenyliodonium tetrafluoroborate, phenyl-4-octyloxyphenyl phenyliodonium hexafluoroantimonate, dodecyldiphenyl iodonium hexafluoroantimonate, [4-[(2-tetradecanol)oxy]phenyl]phenyl iodonium hexafluoroantimonate, and mixtures thereof.

The amount of catalyst used in the coating compositions of the present invention can vary widely and depend on the particular materials used. Only the amount required to catalyze and/or to initiate the hydrolysis and condensation reaction is required, e.g., a catalyzing amount. In certain embodiments, the acidic material and/or acid generating material can be used in an amount from 0.01 to 5 % by weight, based on the total weight of the composition.

Applications

The CCA produced according to the invention may be used in marking devices, including documents of value, articles of manufacture and/or their packaging, and credentials documents, particularly of an anti-counterfeiting device. Non-limiting examples of documents of value include currency, credit cards, compliance certificates, collectors' items and trading cards, deeds, titles or registrations (e.g., automotive), compliance decals, tickets (e.g., travel, events or parking), tax stamps, coins, postage stamps, checks and money orders, stationary, lottery tickets, chips and/or tokens, controlled items (e.g., evidence), key cards, keys, tracing and tracking items, and as a portion of barcodes. Articles of manufacture or packaging of articles of manufacture may include aircraft parts, automotive parts such as vehicle identification numbers, pharmaceutical products and personal care products, recorded media, clothing and footwear, electronic devices, batteries, ophthalmic devices, alcohol, food items, printing inks and printing consumables, writing implements, luxury items such as luggage and handbags, sporting goods, software and software packaging, tamper seals, artwork (including original works of art), construction materials, munitions, toys, fuel, industrial equipment, biological materials and living goods, jewelry, books, antiques, safety items (e.g., fire extinguishers and filtration devices), carpets and other furnishings, chemicals, medical devices, paint and coatings, and windows and transparencies. Examples of credentials which may bear the CCAs produced according to the present invention include drivers' licenses, identification cards (government, corporate, and educational) passports, visas, marriage certificates, hospital bracelets, and diplomas. These examples are not meant to be limiting and are only a sampling of devices that may bear the CCA of the present invention. Such uses are not meant to be limiting.

In addition, the CCA may be produced in the form of a film, which is then applied to an article such as via an adhesive or the like.

Alternatively, the article itself may serve as a substrate by applying the array of particles directly to the housing of the article (such as the housing of electronic devices or directly to goods such as athletic equipment, accessories, optical lenses, optical frames, clothing, including shoes and the like) and coating the array with a matrix composition which is then cured to fix the array.

The CCA of the present invention may be used to authenticate an article, such as to authenticate a document or device or to identify the source of a manufactured product. A document, such as a security card, that bears the CCA of the present invention would be considered to be authentic if the article bearing the CCA exhibits the properties thereof, such as diffraction of certain wavelengths of radiation at a particular intensity level. A "security card" includes documents or devices that authenticate the identity of the bearer thereof or permit access to a facility, such as in the form of a badge. The security card may identify the bearer of the card (e.g., a photo-identification card or a passport) or may function as a document or device that indicates that the bearer thereof is to be permitted access to a secure facility. For example, a security card that appears to be authentic may be tested for having properties of diffracting radiation. A counterfeit security card would fail to exhibit that property. Likewise, consumers of an item (such as a pharmaceutical product) provided in packaging bearing an optically variable anti-counterfeiting device of the present invention can test the packaging for its authenticity by testing its diffractive properties. Packaging which does not respond appropriately would be considered to be counterfeit, while packaging that does exhibit the property would be considered to be authentic. Other consumer goods may include the CCAs of the present invention, such as on the housing of a manufactured product (e.g., electronic devices) or on the surface of an article of clothing (e.g., shoes).

The CCA may further be at least partially covered with a coating composition in a multi-layered structure. In one embodiment, the CCA is coated with the above-described "hard coat" coating composition. In another embodiment, the CCA is coated with an anti-reflective coating, such as in a multi-layered anti-reflective stack. The anti-reflective coating may be formed of a dielectric material; e.g., metal oxides, such as $Zn_2SnO_4$, $In_2SO_4$, $SnO_2$, $TiO_2$, $In_2O_3$, $ZnO$, $Si_3N_4$, and/or $Bi_2O_3$

deposited by sputtering.

The following examples are presented to demonstrate the general principles of the invention. The invention should not be considered as limited to the specific examples presented. All parts are by weight unless otherwise indicated.

## EXAMPLES

### Example 1

A dispersion of polystyrene particles in water was prepared via the following procedure. 3.5 Grams of sodium bicarbonate from Aldrich Chemical Company, Inc., 3.5 g Sipomer PAM 200 from Rhodia, and 4.5 g CD552 (methoxy polyethylene glycol (550) monomethacrylate) from Sartomer, 0.1 g sodium styrene sulfonate (SSS) from Aldrich Chemical Company, Inc., were mixed with 2000 g deionized water and added to a 5-liter flask equipped with a thermocouple, heating mantle, stirrer, reflux condenser, and nitrogen inlet. The mixture was sparged with nitrogen for 45 minutes with stirring and then blanketed with nitrogen. After that, a mixture of 300 g styrene monomer was added with stirring. The mixture was then heated to 70° C and held constant for 30 minutes. Next, sodium persulfate from the Aldrich Chemical Company, Inc. (9.6 g in 70 g deionized water) was added to the mixture under stirring. The temperature of the mixture was maintained at 70° C. for approximately 2 hours. Following that, a preemuslifed mixture of 380 g deionized water, 3.0 g Reasoap SR-10 form Adeak, 270 g styrene, 1.2 g SSS, and 0.5 g sodium persulfate was added to the flask with stirring. The temperature of the mixture was hold at 70° C for 2 hours. After that, a preemuslifed mixture of 380 g deionized water, 3.0 g Reasoap SR-10 form Adeak, 135 g styrene, 135 g methyl methacrylate, 9 g ethylene glycol dimethacrylate, 1.2 g SSS, and 0.5 g sodium persulfate was added to the flask with stirring. The temperature of the mixture was held at 70° C for an additional 2 hours. The resulting dispersion was filtered through a one-micron filter bag.

The polymer dispersion was further ultrafiltered using a 10 cm (4-inch) ultrafiltration housing with a 6.12 cm (2.41 inch) polyvinylidine fluoride membrane, both from PTI Advanced Filtration, Inc. Oxnard, CA, and pumped using a peristaltic pump at a flow rate of approximately 170 ml per second. Deionized water (2882 g) was added to the dispersion after 2882 g of ultrafiltrate had been removed. This exchange was repeated several times until 7209 g of ultrafiltrate had been replaced with 7209 g deionized water. Additional ultrafiltrate was then removed until the solids content of the mixture was 42.6 percent by weight. The material was applied via slot-die coater from Frontier Industrial Technology, Inc., Towanda, PA to a 0.05 mm (2 mil) thick polyethylene terephthalate (PET) substrate and dried at 98.9°C (210°F) for 60 seconds to a dry thickness of approximately 6 microns. The resulting CCA diffracted radiation at 370 nm with a reflectance of 95% measured with a Cary 500 spectrophotometer from Varian, Inc. No visible defects were observed for the CCA.

### Example 2

The experiment shown in Example 1, was repeated, except that CD552 was replaced with CD550 (methoxy polyethylene glycol (350) monomethacrylate) from Sartomer.

The resulting CCA diffracted radiation at 423 nm with a reflectance of 85%. No visible defects were observed for the CCA.

### Comparative Example

A dispersion of polystyrene (latex) particles with non-reactive surfactant was prepared via the following procedure. Sodium bicarbonate (2.5 g) was mixed with 2400 g deionized water, and added to a 5-liter reaction kettle equipped with a thermocouple, heating mantle, stirrer, reflux condenser, and nitrogen inlet. The mixture was sparged with nitrogen for 30 minutes with stirring and then blanketed with nitrogen. Aerosol MA80-I from Cytec Industries, Inc. (20.0g) and 4.0 g Brij 35 (polyoxyethylene(23) lauryl ether), 1.0 g SSS in 144 g deionized water were added to the mixture with stirring. The mixture was heated to approximately 50° C using a heating mantle. Styrene monomer (500 g) was added to the reaction kettle with stirring. The mixture was heated to 65° C. Sodium persulfate (6 g in 100 g deionized water) was added to the mixture with stirring. Under agitation, the temperature was held at approximately 65° C for 4 hours. A mixture of water (300 g), Brij 35 (1 g), styrene (80 g), methyl methacrylate (115 g), ethylene glycol dimethacrylate (10 g), and SSS (0.5 g) was added to the reaction mixture with stirring. The temperature of the mixture was maintained at 65° C for approximately four additional hours. The resulting polymer dispersion was filtered through a one-micron filter bag. The polymer dispersion was then ultrafiltered using a 10 cm (4-inch) ultrafiltration housing with a 6.12 cm (2.41 inch) polyvinylidine fluoride membrane and pumped using a peristaltic pump at a flow rate of approximately 170 ml per second. Deionized water was continuously added to the dispersion until 11,349 g of ultrafiltrate had been replaced with 11,348 g deionized water. Additional ultrafiltrate was then removed until the solids content of the mixture was 42.0% by weight. The material was applied via slot-die coater from Frontier Industrial Technology, Inc. to a 0.05 mm (2 mil) thick PET substrate and dried at 82.2°C (180°F) for 40 seconds to a dry thickness of approximately 10 microns. The resulting material diffracted light at 396 nm with a reflectance of 97.0%. The resulting CCA had many visible defects, with an average density of 20 defects per 6.45 $cm^2$ (square inch) of film.

## Claims

1. A crystalline colloidal array comprising an ordered periodic array of polymeric particles, said particles each having a surface comprising a polymeric material and a reactive surfactant covalently bound to the surfaces of the particles and a matrix surrounding the array of polymeric particles, wherein the reactive surfactant is selected from

   (a) a reactive surfactant having a reactive group on the hydrophobic segment selected from $C_{10-20}$ alkyl chains, alkyl aryl segments, and polypropyloxy units;
   (b) polymerizable surfactants having a hydrophilic portion selected from a sulfonate allyl amine moiety, a sulfate allyl amine moiety, and a phosphate allyl amine moiety, and a hydrophobic portion selected from -R and a group having the formula $RO-(CH_2CH_2O)_n-$; wherein R is an alkyl group or an alkyl-substituted phenyl group wherein the alkyl group has 1 to 20 carbon atoms, such as 10 to 18 carbon atoms, and n is an integer from 2 to 100; and
   (c) polyethylene glycol monomethacrylate, polyethylene glycol acrylate, phosphate esters of poly(ethylene glycol) monomethacrylate, phosphate esters of poly(ethylene glycol) monoacrylate, poly(ethylene glycol) monomethacrylate sulfate, poly(ethylene glycol) monoacrylate sulfate, allyloxypolyethoxy sulfate, and allyloxypolyethoxy phosphate.

2. The crystalline colloidal array of claim 1 wherein the polymeric particles comprise polymer selected from polystyrene, acrylic, polyurethane, alkyd, polyester, siloxane, polysulfide, and/or epoxy.

3. The crystalline colloidal array of claim 1 wherein the polymeric particles have a unitary structure.

4. The crystalline colloidal array of claim 1 wherein the polymeric particles each comprise a core comprising a first polymer and a shell comprising a second polymer, wherein said first and second polymers are non-film forming and are different from each other.

5. The crystalline colloidal array of claim 1 wherein the reactive surfactant comprises a reactive group that binds to the polymeric particles wherein the reactive group comprises acrylate, sulfonate allyl, sulfate allyl, and/or phosphate allyl.

6. The crystalline colloidal array of claim 5 wherein the reactive surfactant comprises at least one of polyethylene glycol monomethacrylate, polyethylene glycol acrylate, phosphate esters of poly(propylene glycol) monomethacrylate, phosphate esters of poly(propylene glycol) monoacrylate, phosphate esters of poly(ethylene glycol) monomethacrylate, phosphate esters of poly(ethylene glycol) monoacrylate, poly(propylene glycol) monomethacrylate sulfate, poly(propylene glycol) monoacrylate sulfate, poly(ethylene glycol) monomethacrylate sulfate, poly(ethylene glycol) monoacrylate sulfate, allyloxypolyethoxy sulfate, allyloxypolyethoxy phosphate, allyloxypolypropyloxy sulfate, and allyloxypolypropyloxy phosphate.

7. A method of preparing a crystalline colloidal array comprising:

   dispersing a monomer in an emulsion comprising a reactive surfactant; polymerizing the monomer to produce monodispersed polymeric particles, wherein the reactive surfactant is covalently bound to the polymeric particles; and applying the dispersion to a substrate, whereby the particles self-align into an ordered periodic array, wherein the reactive surfactant is selected from

   (a) a reactive surfactant having a reactive group on the hydrophobic segment selected from $C_{10-20}$ alkyl chains, alkyl aryl segments, and polypropyloxy units;
   (b) polymerizable surfactants having a hydrophilic portion selected from a sulfonate allyl amine moiety, a sulfate allyl amine moiety, and a phosphate allyl amine moiety, and a hydrophobic portion selected from -R and a group having the formula $RO-(CH_2CH_2O)_n-$; wherein R is an alkyl group or an alkyl-substituted phenyl group wherein the alkyl group has 1 to 20 carbon atoms, such as 10 to 18 carbon atoms, and n is an integer from 2 to 100; and
   (c) polyethylene glycol monomethacrylate, polyethylene glycol acrylate, phosphate esters of poly(ethylene glycol) monomethacrylate, phosphate esters of poly(ethylene glycol) monoacrylate, poly(ethylene glycol) monomethacrylate sulfate, poly(ethylene glycol) monoacrylate sulfate, allyloxypolyethoxy sulfate, and allyloxypolyethoxy phosphate.

8. The method of claim 7 wherein the polymeric particles are as specified in any one of claims 2 and 3 or the reactive surfactant is as specified in any one of claims 5 and 6 or wherein at least 30% of the reactive surfactant is bound to the particles.

9. The method of claim 7 further comprising coating the array of particles with a curable matrix composition and curing the matrix composition to fix the array of particles within the matrix.

10. The method of claim 7 wherein shell monomers are added to a core particle dispersion containing the reactive surfactant, whereby the shell monomers polymerize onto the core particles with the reactive surfactant bound to the shell, thereby producing core-shell particles.

11. The method of claim 10, wherein the particle cores are produced in an emulsion containing the non-reactive surfactant or both reactive and non-reactive surfactant.

12. The method of claim 10 wherein the polymerized monomers are cross-linked and non-film forming.

13. An article bearing the crystalline colloidal array of claim 1.

14. The article of claim 13 wherein said article comprises currency or an identification document or said crystalline colloidal array comprises packaging of said article.

15. A film or coating comprising the crystalline colloidal array of claim 1.


**Patentansprüche**

1. Kristalline kolloidale Anordnung umfassend eine geordnete periodische Anordnung von polymeren Teilchen, wobei diese Teilchen jeweils eine Oberfläche haben, die ein polymeres Material und ein reaktives Tensid, das kovalent an die Oberflächen der Teilchen gebunden ist, aufweist, und eine Matrix, die die Anordnung von polymeren Teilchen umgibt, wobei das reaktive Tensid ausgewählt ist aus:

(a) einem reaktiven Tensid mit einer reaktiven Gruppe an dem hydrophoben Abschnitt, ausgewählt aus $C_{10-20}$-Alkylketten, Alkylarylsegmenten und Polypropyloxyeinheiten,
(b) polymerisierbaren Tensiden mit einem hydrophilen Teil, ausgewählt aus einer Sulfonatallylamineinheit, einer Sulfatallylamineinheit und einer Phosphatallylamineinheit, und einem hydrophoben Teil, ausgewählt aus -R und einer Gruppe der Formel $RO-(CH_2CH_2O)_n-$, worin R eine Alkylgruppe oder alkylsubstituierte Phenylgruppe ist, wobei die Alkylgruppe 1 bis 20 Kohlenstoffatome aufweist, wie etwa 10 bis 18 Kohlenstoffatome, und n eine ganze Zahl von 2 bis 100 ist, und
(c) Polyethylenglykolmonomethacrylat, Polyethylenglykolacrylat, Phosphatestern von Poly(ethylenglykol)monomethacrylat, Phosphatestern von Poly(ethylenglykol)monoacrylat, Poly(ethylenglykol)monomethacrylatsulfat, Poly(ethylenglykol)monoacrylatsulfat, Allyloxypolyethoxysulfat und Allyloxypolyethoxyphosphat.

2. Kristalline kolloidale Anordnung nach Anspruch 1, wobei die polymeren Teilchen Polymer enthalten, ausgewählt aus Polystyrol, Acryl, Polyurethan, Alkyd, Polyester, Siloxan, Polysulfid und/oder Epoxy.

3. Kristalline kolloidale Anordnung nach Anspruch 1, wobei die polymeren Teilchen eine einheitliche Struktur aufweisen.

4. Kristalline kolloidale Anordnung nach Anspruch 1, wobei die polymeren Teilchen jeweils einen Kern, der ein erstes Polymer enthält, und eine Hülle, die ein zweites Polymer enthält, aufweisen, wobei dieses erste und zweite Polymer nicht filmbildend sind und sich voneinander unterscheiden.

5. Kristalline kolloidale Anordnung nach Anspruch 1, wobei das reaktive Tensid eine reaktive Gruppe aufweist, die an die polymeren Teilchen bindet, wobei die reaktive Gruppe Acrylat, Sulfonatallyl, Sulfatallyl und/oder Phosphatallyl umfasst.

6. Kristalline kolloidale Anordnung nach Anspruch 5, wobei das reaktive Tensid mindestens eines von Polyethylenglykolmonomethacrylat, Polyethylenglykolacrylat, Phosphatester von Poly(propylenglykol)monomethacrylat, Phosphatester von Poly(propylenglykol)monoacrylat, Phosphatester von Poly(ethylenglykol)monomethacrylat, Phosphatester von Poly(ethylenglykol)monoacrylat, Poly(propylenglykol)monomethacrylatsulfat, Poly(propylenglykol)monoacrylatsulfat, Poly(ethylenglykol)monomethacrylatsulfat, Poly(ethylenglykol)monoacrylatsulfat, Allyloxypolyethoxysulfat, Allyloxypolyethoxyphosphat, Allyloxypolypropyloxysulfat und Allyloxypolypropyloxyphosphat umfasst.

7. Verfahren zur Herstellung einer kristallinen kolloidalen Anordnung, umfassend:

Dispergieren eines Monomers in einer Emulsion, die ein reaktives Tensid enthält,
Polymerisieren des Monomers, um monodispergierte polymere Teilchen zu erzeugen, wobei das reaktive Tensid kovalent an die polymeren Teilchen gebunden ist, und
Aufbringen der Dispersion auf ein Substrat, wobei die Teilchen sich selbst in eine geordnete periodische Anordnung ausrichten,
wobei das reaktive Tensid ausgewählt ist aus:

(a) einem reaktiven Tensid mit einer reaktiven Gruppe an dem hydrophoben Abschnitt, ausgewählt aus $C_{10-20}$-Alkylketten, Alkylarylsegmenten und Polypropyloxyeinheiten,

(b) polymerisierbaren Tensiden mit einem hydrophilen Teil, ausgewählt aus einer Sulfonatallylamineinheit, einer Sulfatallylamineinheit und einer Phosphatallylamineinheit, und einem hydrophoben Teil, ausgewählt aus -R und einer Gruppe der Formel $RO\text{-}(CH_2CH_2O)_n\text{-}$, worin R eine Alkylgruppe oder alkylsubstituierte Phenylgruppe ist, wobei die Alkylgruppe 1 bis 20 Kohlenstoffatome aufweist, wie etwa 10 bis 18 Kohlenstoffatome, und n eine ganze Zahl von 2 bis 100 ist, und

(c) Polyethylenglykolmonomethacrylat, Polyethylenglykolacrylat, Phosphatestern von Poly(ethylenglykol)monomethacrylat, Phosphatestern von Poly(ethylenglykol)monoacrylat, Poly(ethylenglykol)monomethacrylatsulfat, Poly(ethylenglykol)monoacrylatsulfat, Allyloxypolyethoxysulfat und Allyloxypolyethoxyphosphat.

8. Verfahren nach Anspruch 7, wobei die polymeren Teilchen wie in einem der Ansprüche 2 and 3 definiert sind oder das reaktive Tensid wie in einem der Ansprüche 5 und 6 definiert ist oder wobei wenigstens 30 % des reaktiven Tensids an die Teilchen gebunden sind.

9. Verfahren nach Anspruch 7, das ferner die Beschichtung der Anordnung von Teilchen mit einer härtbaren Matrixzusammensetzung und Härten der Matrixzusammensetzung, um die Anordnung von Teilchen innerhalb der Matrix zu fixieren, umfasst.

10. Verfahren nach Anspruch 7, worin Hüllenmonomere zu einer Kernteilchendispersion gegeben werden, die das reaktive Tensid enthält, wobei die Hüllenmonomere auf den Kernteilchen polymerisieren mit dem reaktiven Tensid an die Hülle gebunden und dabei Kern/Hülle-Teilchen erzeugen.

11. Verfahren nach Anspruch 10, wobei die Teilchenkerne in einer Emulsion hergestellt werden, die das nichtreaktive Tensid oder sowohl reaktives als auch nichtreaktives Tensid enthält.

12. Verfahren nach Anspruch 10, wobei die polymerisierten Monomere vernetzt und nicht filmbildend sind.

13. Gegenstand, der die kristalline kolloidale Anordnung nach Anspruch 1 aufweist.

14. Gegenstand nach Anspruch 13, wobei dieser Gegenstand ein Zahlungsmittel oder ein Identifikationsdokument ist oder diese kristalline kolloidale Anordnung die Verpackung dieses Gegenstands ausmacht.

15. Film oder Beschichtung, die die kristalline kolloidale Anordnung nach Anspruch 1 enthält.

## Revendications

1. Arrangement cristallin colloïdal qui comprend un arrangement ordonné périodique de particules polymères, lesdites particules présentant chacune une surface comportant un matériau polymère et un tensioactif apte à réagir lié à la surface des particules par liaison covalente, et une matrice environnant l'arrangement de particules polymères, étant entendu que le tensioactif apte à réagir est choisi parmi

(a) un tensioactif apte à réagir portant un groupe apte à réagir sur le segment hydrophobe qui est choisi parmi des chaînes alkyle en $C_{10-20}$, des segments alkyl-aryle et des motifs polypropyloxy,

(b) des tensioactifs polymérisables comportant une partie hydrophile choisie parmi un fragment sulfonate-allylamine, un fragment sulfate-allylamine et un fragment phosphate-allylamine, et une partie hydrophobe choisie parmi une entité de symbole -R et un groupe répondant à la formule $RO\text{-}(CH_2CH_2O)_n\text{-}$, dans laquelle R représente un groupe alkyle ou un groupe phényle à substitution alkyle, le groupe alkyle comportant 1 à 20 atomes de carbone, comme 10 à 18 atomes de carbone, et l'indice n est un nombre entier valant de 2 à 100,

(c) et du monométhacrylate de polyéthylène-glycol, de l'acrylate de polyéthylène-glycol, des esters phosphates de monométhacrylate de poly(éthylène-glycol), des esters phosphates de monoacrylate de poly(éthylène-glycol), du sulfate de monométhacrylate de poly(éthylène-glycol), du sulfate de monoacrylate de poly(éthylène-glycol), de l'allyloxypolyéthoxy-sulfate et de l'allyloxypolyéthoxy-phosphate.

2. Arrangement cristallin colloïdal selon la revendication 1, dans lequel les particules polymères sont constituées de matériau polymère choisi parmi polystyrène, acrylique, polyuréthane, alkyde, polyester, siloxane, polysulfure et/ou époxyde.

3. Arrangement cristallin colloïdal selon la revendication 1, dans lequel les particules polymères présentent une structure monobloc.

**4.** Arrangement cristallin colloïdal selon la revendication 1, dans lequel les particules comprennent chacune un noyau constitué d'un premier polymère et une enveloppe constituée d'un deuxième polymère, lesdits premier et deuxième polymères étant non filmogènes et différents l'un de l'autre.

**5.** Arrangement cristallin colloïdal selon la revendication 1, dans lequel le tensioactif apte à réagir porte un groupe apte à réagir qui se lie aux particules polymères, le groupe apte à réagir comprenant une entité acrylate, sulfonate-allyle, sulfate-allyle et/ou phosphate-allyle.

**6.** Arrangement cristallin colloïdal selon la revendication 5, dans lequel le tensioactif apte à réagir comprend au moins un des suivants : monométhacrylate de polyéthylène-glycol, acrylate de polyéthylène-glycol, esters phosphates de monométhacrylate de poly(propylène-glycol), esters phosphates de monoacrylate de poly(propylène-glycol), esters phosphates de monométhacrylate de poly(éthylène-glycol), esters phosphates de monoacrylate de poly(éthylène-glycol), sulfate de monométhacrylate de poly(propylène-glycol), sulfate de monoacrylate de poly(propylène-glycol), sulfate de monométhacrylate de poly(éthylène-glycol), sulfate de monoacrylate de poly(éthylène-glycol), allyloxypolyéthoxy-sulfate, allyloxypolyéthoxy-phosphate, allyloxypolypropyloxy-sulfate et allyloxypolypropyloxy-phosphate.

**7.** Procédé de préparation d'un arrangement cristallin colloïdal, qui comprend :

- la dispersion d'un monomère dans une émulsion comprenant un tensioactif apte à réagir,
- la polymérisation du monomère de manière à produire des particules polymères monodispersées, le tensioactif apte à réagir étant lié aux particules polymères par liaison covalente,
- et l'application de la dispersion sur un support, ce qui permet l'auto-alignement des particules selon un arrangement ordonné périodique, étant entendu que le tensioactif apte à réagir est choisi parmi

(a) un tensioactif apte à réagir portant un groupe apte à réagir sur le segment hydrophobe qui est choisi parmi des chaînes alkyle en $C_{10-20}$, des segments alkyl-aryle et des motifs polypropyloxy,
(b) des tensioactifs polymérisables comportant une partie hydrophile choisie parmi un fragment sulfonate-allylamine, un fragment sulfate-allylamine et un fragment phosphate-allylamine, et une partie hydrophobe choisie parmi une entité de symbole -R et un groupe répondant à la formule

$RO-(CH_2CH_2O)_n-$, dans laquelle R représente un groupe alkyle ou un groupe phényle à substitution alkyle, le groupe alkyle comportant 1 à 20 atomes de carbone, comme 10 à 18 atomes de carbone, et l'indice n est un nombre entier valant de 2 à 100,
(c) et du monométhacrylate de polyéthylène-glycol, de l'acrylate de polyéthylène-glycol, des esters phosphates de monométhacrylate de poly(éthylène-glycol), des esters phosphates de monoacrylate de poly(éthylène-glycol), du sulfate de monométhacrylate de poly(éthylène-glycol), du sulfate de monoacrylate de poly(éthylène-glycol), de l'allyloxypolyéthoxy-sulfate et de l'allyloxypolyéthoxy-phosphate.

**8.** Procédé selon la revendication 7, dans lequel les particules polymères répondent aux spécifications figurant dans n'importe laquelle des revendications 2 et 3, ou le tensioactif apte à réagir répond aux spécifications figurant dans n'importe laquelle des revendications 5 et 6, ou dans lequel une proportion d'au moins 30 % du tensioactif apte à réagir est liée aux particules.

**9.** Procédé selon la revendication 7, qui comporte par ailleurs le fait de revêtir l'arrangement de particules avec une composition de matrice durcissable, et faire durcir la composition de matrice de manière à fixer l'arrangement de particules au sein de la matrice.

**10.** Procédé selon la revendication 7, dans lequel on ajoute des monomères d'enveloppe à une dispersion de particules de noyau contenant le tensioactif apte à réagir, moyennant quoi les monomères d'enveloppe se polymérisent sur les particules de noyau, le tensioactif apte à réagir étant lié à l'enveloppe, ce qui permet de produire des particules du type noyau-enveloppe.

**11.** Procédé selon la revendication 10, dans lequel on produit les noyaux de particules dans une émulsion contenant du tensioactif inapte à réagir ou à la fois du tensioactif apte à réagir et du tensioactif inapte à réagir.

**12.** Procédé selon la revendication 10, dans lequel les monomères polymérisés sont réticulés et non filmogènes.

**13.** Article portant un arrangement cristallin colloïdal selon la revendication 1.

**14.** Article selon la revendication 13, dans lequel ledit article comprend de la monnaie ou un document d'identification, ou ledit arrangement cristallin colloïdal constitue l'emballage dudit article.

**15.** Film ou revêtement comprenant un arrangement cristallin colloïdal selon la revendication 1.

## REFERENCES CITED IN THE DESCRIPTION

### Patent documents cited in the description

- US 6894086 B
- US 2008188381 A
- WO 0140872 A1
- US 20070100026
- US 20090163619
- US 4833172 A
- US 4861644 A
- US 6114023 A
- US 6355189 B
- US 6264859 B
- US 6469119 B
- US 6180248 B
- US 5916686 A
- US 5401579 A
- US 4799963 A
- US 5344712 A
- US 4731264 A
- US 4753827 A
- US 4754012 A
- US 4814017 A
- US 5115023 A
- US 5035745 A
- US 5231156 A
- US 5199979 A
- US 6106605 A
- US 3991033 A
- US 3849137 A
- US 4086210 A
- US 4368253 A
- US 5451345 A
- US 5639802 A